# EUROPEAN PATENT APPLICATION

(11) **EP 2 156 894 A1**
(43) Date of publication of application: **24.02.2010**
(21) Application number: 08171327.3
(22) Date of filing: 11.12.2008
(51) Int. Cl.: B03C 1/28, B03C 1/033, C02F 1/48

(54) **Magnetizing processing unit for liquid and gas**

(30) Priority: 18.08.2008 CN 200820134407 U
(71) Applicant: W Y G M (Dalian) Technology Co., Ltd., Zhongshan District Dalian City Liaoning 116000 (CN)
(72) Inventor:
(74) Representative: Szabo, Zsolt

(57) **Abstract**

The present invention relates to a magnetizing processing unit for liquid and gas, which includes an outer tube matching with a flow conducting tube, tube connectors connected with two ends of the outer tube and sealing two open ends of the flow conducting tube, a swirl movement generator fixed on the inner wall face of the upper end of the outer tube, a magnetic vibrating element fixed on the inner wall face of the lower end of the outer tube and a magnetic force generator located on the outer surrounding of the lower end of the outer tube, wherein said magnetic vibrating element is provided in the form of two or more sets of magnetic vibrating element, each having a main spring fixed on the inner wall face of the lower outer tube. The present magnetizing processing unit has a simple structure and a more powerful magnetizing effect. It is easy to be installed and can be applied more widely.

## Description

### Field of the invention

The present invention relates generally to a magnetizing processing unit for liquid material, more particularly to a magnetizing processing unit used for activating and removing impurity from liquid and gas.

### Background Art

Presently, magnetizing processing unit for liquid material has been widely used in industrial and agricultural production and everyday life to promote production efficiency, to maintain equipment performance, to improve product quality, to save energy and to protect environment. One of the generally applied magnetizing processing units for liquid material at present makes electrostatic charge, that is produced by friction between fluids impacting each other, more intense through its swirl movement driven by a magnetic field, so as to activate the fluid and to keep it uncontaminated, as well as to extend the useful life of the equipment.

Chinese Patent Appl. No. 200720126824.9 entitled "Magnetizing Processing Unit for Liquid Material" discloses a tube magnetizing unit for liquid material, which comprises magnetic vibrating element, magnetic force generator and swirl movement generator. This magnetizing processing unit is connected with flow conducting tube as a part of it. Within a treatment area, there is a vibrating element which is magnetized by the magnetic force generator. When liquid flows through the swirl movement generator, said liquid becomes a spiral flow under the effect of a spiral component, then it is magnetized and vibrated in the treatment area, in order that the liquid be activated to inhibit bacterium growth and to keep the liquid clear and non-oxidizable. In addition, the impurity within the liquid becomes charged and can be captured by the magnetic vibrating element, i.e. by a spring fixed into the magnetizing processing unit on the same axis with the tube.

The foregoing magnetizing processing unit for liquid does have its advantage in magnetizing liquid, but there are still some defects in application. Therefore, it is not able to provide optimal performance and is not applied widely. Its defects are as follows:
1. With ordinary magnetizing effect, it applies only to magnetizing returnable lubricant in general machining field, and cannot meet higher requirements.
2. It applies only to magnetizing liquid substances, but there is a high demand for magnetizing other media in different fields.
Therefore, the existing magnetizing processing unit for liquid is still need to be improved in structure and application. In this field in the world, there is an important and urgent need to develop a magnetizing processing unit for liquid and gas having simple structure and more powerful magnetizing effect. Furthermore, there is also a need for providing a magnetizing processing unit for liquid and gas that can be easily installed and more widely applied relative to the prior art devices.

### Summary of the invention

It is therefore an object of the present invention to overcome the defects of existing magnetizing processing units for liquid and to provide a novel magnetizing processing unit for liquid and gas with a simple structure and a more powerful magnetizing effect. A further object of the invention is to provide a magnetic processing unit for liquid and gas that is easy to be installed and to be applied more widely.

According to the present invention, a magnetizing processing unit for liquid and gas is provided which includes an outer tube matching with a flow conducting tube, tube connectors connected with two ends of the outer tube and sealing two open ends of the flow conducting tube, a swirl movement generator fixed on the inner wall face of the upper end of the outer tube, a magnetic vibrating element fixed on the inner wall face of the lower end of the outer tube and a magnetic force generator located on the outer surrounding of the lower end of the outer tube, wherein said magnetic vibrating element is provided as two or more sets of magnetic vibrating element, each having a main spring fixed on the inner wall face of the lower outer tube.

According to the foregoing magnetizing processing unit for liquid and gas, the swirl movement generator may be a spiral component fixed on the outer tube or at least one swirl slot formed on/in the outer tube.

According to the foregoing magnetizing processing unit for liquid and gas, the magnetic force generator is located on the outer surrounding of the outer tube within a slidable casing.

According to the foregoing magnetizing processing unit for liquid and gas, the outer surrounding of the magnetic vibrating element is contacted/coupled seamlessly with the inner wall face of the outer tube.

According to the foregoing magnetizing processing unit for liquid and gas, the main springs of the magnetic vibrating elements are arranged from within to without.

According to the foregoing magnetizing processing unit for liquid and gas, all the main springs of the magnetic vibrating elements are on the same axis with the outer tube.

According to the foregoing magnetizing processing unit for liquid and gas, the main springs of the magnetic vibrating elements spire on the same direction.

According to the foregoing magnetizing processing unit for liquid and gas, the magnetic vibrating elements further include auxiliary springs wound on main springs and fixed on the inner wall face of the lower end of the outer tube.

According to the foregoing magnetizing processing unit for liquid and gas, the main spring and the auxiliary spring are made of a magnetic metallic material, such as martensitic stainless steel material.

According to the foregoing magnetizing processing unit for liquid and gas, both the main spring and the auxiliary spring are welded, bound or screwed on the inner wall face of the lower end.

The present invention is more advanced than the existing technology, and can be widely applied in different industries. It changes the structure of the existing magnetizing processing unit only to a slight extent and adds one or more magnetic vibrating elements to it, but it provides more powerful magnetizing function and a wider application. Its simple structure is easy to be installed for magnetizing not only liquids but gaseous substances as well. Moreover, it is a cost saving and practical technology to meet the demand of different industries.

In general, the magnetizing processing unit for liquid and gas according to the invention is easy to be installed and has simple structure, powerful magnetic effect and wide application. This utility model is more advanced and practical than existing unit, and can be applied in a lot of different industries.

The invention can be best understood through the following description and the accompanying drawings.

### Description of the Drawings

Fig. 1 illustrates the overall sectional view of a preferred embodiment of the magnetizing processing unit according to the present invention.
Fig. 2 illustrates the elastic vibrating element of the embodiment shown in Fig. 1.
Fig. 3 shows the elastic vibrating element of Fig. 2 in a side view.

### Description of the Specific Embodiments

The following preferred embodiments and the accompanying drawings are further provided to best illustrate the objects, structure, feature and function of the inventive solution.

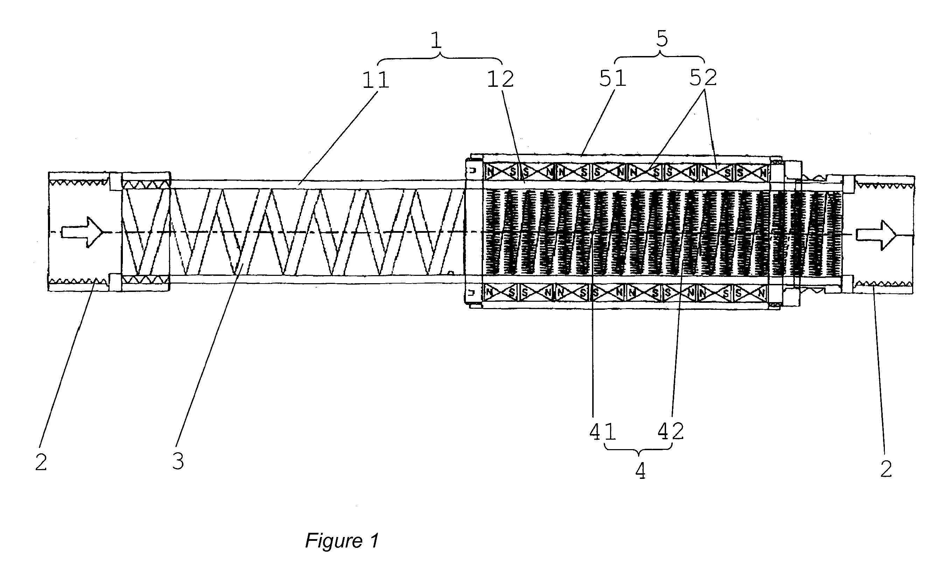

Referring to Fig. 1, the magnetizing processing unit according to the invention includes an outer tube 1, two tube connectors 2, a swirl movement generator 3, two or more sets of magnetic vibrating element 4 and a magnetic force generator 5.

The shape and size of the outer tube 1 may subject to the flow conducting tube to be matched; two tube connectors 2 are fixed on two ends of the outer tube 1; the outer tube 1 is averagely divided into an upper end 11 and a lower end 12 along the flow direction as shown in Fig. 1. Preferentially, the outer tube 1 is made of austenitic stainless steel or other non-magnetizable materials, such as SUS304.

Swirl movement generator 3, such as spiral component as shown in Fig. 1, locates in the upper end 11 of the outer tube 1. Two ends of the spiral component is welded, bound or screwed on the inner wall face of the upper end 11, its outer surrounding is contacted seamlessly with the inner wall face of the upper end 11, and its normal line on the upper end flank is approximately parallel with the central axis of the outer tube 1. Preferentially, the spiral component is made of austenitic stainless steel or other non-magnetizable and inflexible materials, such as SUS304. In addition, said swirl movement generator 3 may also be provided in the form of at least one swirl slot formed on/in the inner wall face of the upper end 11.

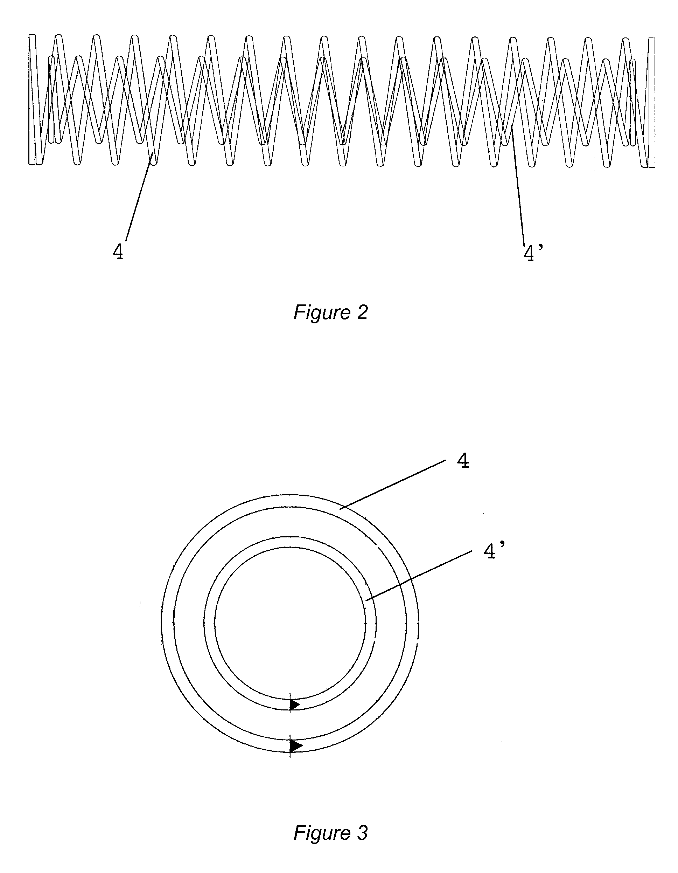

Magnetic vibrating element 4 locates in the lower end 12 of the outer tube 1. Each magnetic vibrating element 4 includes a main spring 41. Preferentially, an auxiliary spring 42 is wound on each main spring 41. Both the main spring 41 and the auxiliary spring 42 are welded, bound or screwed on the inner wall face of the lower end 12. To make Fig. 1 more clear, only one set of magnetic vibrating element is illustrated and the respective auxiliary spring is also omitted. Referring to Figs. 2 and 3, there are in fact two sets of magnetic vibrating element shown as 4 and 4'. Here, winding diameter of the magnetic vibrating element 4' is less than that of the magnetic vibrating element 4, and it is located in the inner side of the main spring of the magnetic vibrating element 4. Similarly to the structure shown in Figs. 2 and 3, the present invention is available for more sets of magnetic vibrating element arranged from within to without and departing from the outer surrounding of the magnetic vibrating element 4 and the inner wall face of the outer tube 1. Preferentially, the magnetic vibrating element is formed along the same direction as the main spring and is arranged on the same axis with the outer tube 1. Both the main spring 41 and the auxiliary spring 42 are made of a magnetic metallic material; for this purpose, magnetizable martensitic stainless steel is preferred.

The magnetic force generator 5 comprises a casing 51 and several magnets 52 of different magnetic poles in it. Said different magnetic poles provide more intensive magnetic field within the outer tube 1. The casing 51 posits the magnetic force generator 5 on the outer surrounding of the lower end 12. It is preferred to make the casing 51 slidable on the outer surrounding of the outer tube 1. Magnets 52 may be permanent magnets or electromagnets. Magnets 52 in their more preferred forms are more powerful disk neodymium magnets.

In use, the magnetizing processing unit for liquid and gas according to the invention is connected with an equipment as a part of flow conducting tube in the direction of flow, as shown in Fig. 1. Here, the two tube connectors 2 seal the two connecting ends. When liquid flows from the upper end 11 to the lower end 12, it will be in swirl movement under the effect of the swirl movement generator 3. In the lower end 12, the liquid will vibrate under the effect of magnetic vibrating elements 4 and 4'. Then a more complicated swirl movement is induced jointly by the magnetic force generator 5, the magnetic vibrating element 4 and the magnetic vibrating element 4', so as to fully activate the liquid and gas, to disinfect them and to extend the useful life of the equipment. Moreover, the magnetic vibrating element can capture and adsorb the magnetized small impurities with electrostatic charge.

When magnetizing liquid with the inventive unit having a slidable casing 51 on the outer tube 1, the magnetic force generator 5 is posited on the outer surrounding of the lower end 12 to magnetize said magnetic vibrating element 4, so as to activate the flow-through fluid and gas and adsorb the impurity therein; when cleaning flow conducting tube, the magnetic force generator 5 is posited on the outer surrounding of the upper end 11 to demagnetize the magnetic vibrating element 4 and to release the impurity adsorbed by it.

The magnetizing processing unit according to the invention utilizes two or more sets of magnetic vibrating element to further activate swirl movement of the liquid, as well as to improve the activating and the magnetizing effects. It can be applied not only to magnetize a liquid substance but also to magnetize a gaseous material.

Although here the preferred embodiments of the invention have been illustrated and described, various alternatives, modifications and equivalents thereof may be used by those skilled in this art without departing from the essential scope thereof. Therefore, the foregoing description should not be taken as limiting the scope of the invention. However, it is understood that the invention covers all simple alternatives, modifications and equivalents according to the technical essential of the inventive solution and falling within the scope of the foregoing claims.

## Claims

1. A magnetizing processing unit for liquid and gas, comprising
- an outer tube matching with a flow conducting tube;
- tube connectors connected with two ends of the outer tube and sealing two open ends of the flow conducting tube;
- a swirl movement generator fixed on the inner wall face of the upper end of the outer tube;
- a magnetic vibrating element fixed on the inner wall face of the lower end of the outer tube; and
- a magnetic force generator arranged on the outer surrounding of the lower end of the outer tube, wherein
said magnetic vibrating element is provided as two or more sets of magnetic vibrating element, each having a main spring fixed on the inner wall face of the lower outer tube.

2. A magnetizing processing unit for liquid and gas as in claim 1, wherein the swirl movement generator is provided as a spiral component fixed on the inner wall face of the upper end of the outer tube or as swirl slots formed on/in the inner wall face of the upper end of the outer tube.

3. A magnetizing processing unit for liquid and gas as in claim 1, wherein the magnetic force generator is located in a casing slidable on the outer surrounding of the outer tube.

4. A magnetizing processing unit for liquid and gas as in claim 1, wherein the outer surrounding of the magnetic vibrating element and the inner wall face of the outer tube are seamlessly coupled.

5. A magnetizing processing unit for liquid and gas as in claim 1, wherein the two or more sets of magnetic vibrating element are arranged from within to without.

6. A magnetizing processing unit for liquid and gas as in claim 5, wherein the main springs of the magnetic vibrating elements and the outer tube extend along the same axis.

7. A magnetizing processing unit for liquid and gas as in claim 1, wherein the main springs of the magnetic vibrating elements spire on the same direction.

8. A magnetizing processing unit for liquid and gas as any of claims 1 to 7, wherein the magnetic vibrating elements further include auxiliary springs wound on main springs and fixed on the inner wall face of the lower end of the outer tube

9. A magnetizing processing unit for liquid and gas as in claim 8, wherein the main springs and the auxiliary springs are made of a magnetic metallic material, preferably of martensitic stainless steel.

10. A magnetizing processing unit for liquid and gas as in claim 8, wherein the main springs and the auxiliary springs are welded, bound or screwed on the lower end of the outer tube.
